# EUROPEAN PATENT APPLICATION

(11) **EP 2 388 134 A1**
(43) Date of publication of application: **23.11.2011**
(21) Application number: 10163167.9
(22) Date of filing: 18.05.2010
(51) Int. Cl.: B32B 3/02, B32B 3/06, B32B 3/08, E04B 1/76

(54) **Modular insulation system**

(71) Applicant: Vancraeynest, Bertrand, 8790 Waregem (BE); Vancraeynest, Didier, 8790 Waregem (BE)
(72) Inventor: Vancraeynest, Bertrand, 8790 Waregem (BE); Vancraeynest, Didier, 8790 Waregem (BE)
(74) Representative: Luys, Marie-José A.H.

(57) **Abstract**

Modular insulation system comprising at least one insulation tile (1) comprising multiple layers, at least one of said layers being a layer of an insulating material (2), another layer being an upper surface layer (3) comprising a structural net (4) embedded in a first adhesive hardening compound, whereby the structural net (4) extends from the upper surface layer of the insulation tile (1) outside a surface area of the tile (1), thus forming protruding net parts (5), the protruding net parts (5) being capable of interacting with the upper surface layer (3) of an adjacent insulation tile (5).

## Description

The present invention relates to a modular insulation system comprising at least one insulation tile comprising multiple layers, at least one of said layers being a layer of an insulating material, another layer being an upper surface layer comprising a structural net embedded in a first adhesive hardening compound.

Insulation is a very important aspect in building technology, as it provides buildings with thermal comfort and reduces unwanted heat loss or gain, thus decreasing energy demands of heating and cooling systems. Numerous types of materials have been developed that slow down heat loss, such as cellulose, glass wool, etc. These different types of insulating materials have to be installed inside of or onto the surface of the walls defining the building to be insulated. In case these insulation materials have to be installed on the outer surface of a wall, several options are possible. For example, modular insulation systems can be applied in which relatively small tiles of insulating materials are attached to the walls or large pieces of insulating materials can be used to cover larger parts of the walls to be insulated. In modular insulation systems, the tiles can be arranged one by one, next to each other, until the whole wall is covered with insulating materials. In case large pieces of insulating materials are used, the insulating materials are attached to a large surface of the wall in one act. Various types and shapes of these kinds of insulation materials are available on the market, such as for example roles of flexible insulating materials which can be unrolled to large insulation-strips.

In general, modular systems using tiles are more easy to install, and are thus preferred. As for insulation applications inside of buildings, modular systems using tiles are thus commonly applied. As for insulation purposes outside of buildings, the situation is however more complex.

It is difficult to apply the currently available modular systems outside of buildings for several reasons. For one, most outer walls of buildings are a lot higher than inner walls. Therefore, installation will be more complex, as it is not obvious to apply insulation materials to the wall when working at high levels. Also, the accumulated weight of tiles applied on a high wall increases rapidly, as a result of which one or more tiles might collapse, possible causing the entire insulation structure to collapse. This problem further increases as insulation structures applied on outer walls often function as a base layer for the attachment of additional decorative or finishing layers, such as plaster, timber, etc. These finishing layers further increase the weight load on the insulation structure, and thus also further increase the risk of collapsing. Furthermore, outer walls are often exposed to severe meteorological conditions, such as winds, rain, etc. Modular systems comprising insulation tiles mostly have splits between the different tiles, as a result of which, wind and rain may contact the wall itself, causing damage or decreasing the insulating capacities of the wall and the insulation structure. Therefore, mostly other systems using larger pieces of insulation material are used for outside insulating purposes.

For example, large roles of insulating material as are described here above are commonly applied onto the surface of outer walls. In this case, the roles of insulating materials are unrolled to form large strips which can be attached to the wall. To cover these insulating materials, protect them from the weather and provide them with additional strength, a structural net is often applied onto the insulating material. Before this net is applied, a layer of an adhesive hardening compound is first applied. Subsequently, the net is attached to this adhesive hardening compound while it is still in a semi-liquid condition. After this, another layer of the adhesive hardening compound is again smeared over the net creating an upper surface layer of this adhesive hardening compound in which the net is embedded. The adhesive hardening compound will off course harden or solidify, thus firmly attaching and connecting the net to the insulating material, and protecting the insulating materials from outside influences. This surface layer comprising a net strongly reinforces the insulation layer and provides a solid base for the attachment of additional finishing layers.

This is however a very complex and time-consuming method which is difficult for the persons installing the insulating layers. Therefore, it would be desirable to have a modular insulating system similar to the systems used for inside purposes, which however does not show the problems associated with installing modular insulation systems onto outer walls, described here above.

It is therefore a goal of the present invention to provide a modular insulation system which is more suitable for use on outer walls.

This is achieved according to the present invention with a modular insulation system showing the technical characteristics of the characterizing part of the first claim.

Thereto, the structural net extends from the upper surface layer of the insulation tile outside a surface area of the tile, thus forming protruding net parts, the protruding net parts being capable of interacting with the upper surface layer of an adjacent insulation tile.

Such a system can be easily applied onto outer walls. The structural net and the adhesive hardening compound are already applied onto the insulating layer, saving time and simplifying installation. The tiles can further be connected to each other in a firm and tightly sealing manner, thus protecting the wall from outside meteorological circumstances and avoiding splits. The tiles preferably also have a flat upper surface layer. As such, a construction compiled by these tiles, will also have a flat surface layer, which will be easier to accomplish than by using the traditional insulation methods for outer walls.

Preferably, the protruding net parts of the insulation tile are attached to an upper surface layer of an adjacent insulation tile by smearing a second adhesive hardening compound over the net and the upper surface layer of an adjacent insulation tile in such a manner that the upper surface layer of the second tile is covered with a layer of the second adhesive hardening compound in which the protruding net parts are embedded.

As such, the different tiles can be firmly attached to each other. The tiles can first be installed onto the wall, and then be connected to each other, by smearing the second adhesive hardening compound on to the protruding net parts, or this second adhesive hardening compound can be applied on one tile at a time during installation of the insulation tiles. The protruding net parts can first be positioned onto the upper surface layer of an adjacent insulation tile, after which the second adhesive hardening compound is smeared on top of the net, or a layer of the second adhesive hardening compound can first be applied on the surface layer of an adjacent tile after which the protruding net parts can be positioned on to this layer, after which a new layer of second adhesive hardening compound can be applied on top of the net.

Anyhow, the final result will be that the different insulation tiles are connected in a firm and closely sealed fashion, without any slits. The thus created insulation layer on the wall can be more rapidly installed than the presently available insulation systems. The modularity of the system makes it very easy to apply the tiles on a wall and the complex process of applying a net is no longer necessary, since the net is already attached to the tiles. This also provides additional strength to the tiles, as a result of which the tiles are a lot stronger than the currently available insulation tiles, and are thus suitable for outside applications. Given the fact that the entire insulation structure is connected as substantially one piece, and the additional strength which is provided by the upper surface layer, the insulation structure which is formed, will have a much higher load-bearing capacity than the existing modular insulation systems. Therefore, it will be able to function as a base layer for the attachment of additional decorative or finishing layers, rendering it suitable for use in outside applications. Moreover, modified cement allows attachment to the insulation material while at the same time allowing attachment of further finishing or decorative layer known to the person skilled in the art such as for example plaster, cement, etc.

Furthermore, the adhesive hardening compound only has to be applied on the protruding net parts, instead of on the entire surface of the insulating materials, saving valuable time. The combination of all these advantages, renders the modular insulation system according to the present invention to be a highly efficient and sustainable insulation system for outer walls.

The first adhesive hardening compound is chosen from the group consisting of cement, lime, mortar, plaster, modified cement, plastics, synthetic polymers, and combinations of two or more thereof.

These are all substances which are suitable for the use as an adhesive hardening compound.

The second adhesive hardening compound is preferably also chosen from the group consisting of cement, lime, mortar, plaster, modified cement, plastics, synthetic polymers, and combinations of two or more thereof.

Preferably, the first and second adhesive hardening compounds possess a tensile strength, are flexible, hard, smooth, and are easily spreadable. It is also important that this compound does not tear or crack easily. Therefore, the compound used is most preferably modified cement. Cement can be modified such that it possesses all the characteristics mentioned here above. It will still have the same hardness, and show the same resistance against severe meteorological conditions as classical unmodified cement, but it will further show an increased flexibility and a higher resistance against cracking and tearing, which is highly important for the envisaged applications. The layer of modified cement that will be applied will after all be very thin, which may cause classical unmodified cement to crack easily. This will not be the case using modified cement, rendering it to be the perfect material for the modular insulation system according to the present invention. Furthermore, it will be strong and have a high strength, which is also important, given that this layer will also function as a base layer for further decorative or finishing layers that will be applied on top of the insulation layer.

Furthermore, modified cement is highly flexible. This is important given that outside insulation layers are often exposed to high temperature differences, causing many traditional materials to expand or shrink as a result of which, ruptures can occur. The flexibility of modified cement renders this material nearly insensitive for temperature differences.

In a preferred embodiment of the present invention, the first adhesive hardening compound is the same compound as the second adhesive hardening compound.

Preferably, the insulation tile has a rectangular shape comprising two main upper surfaces and four sides.

On one of these two upper surfaces, the upper surface layer can be applied. If so desired, an upper surface layer comprising a net and an adhesive hardening compound can also be applied on both upper surface layers.

A rectangular shape is preferred for several reasons. Rectangular shapes can be easily produced and transported, and they can be easily installed on a wall in a tightly sealing manner, by arranging them with respect to each other in such a way that their sides touch.

Preferably the protruding net parts extend from at least one side of the insulation tile.

More preferably, the protruding net parts extend from two adjacent sides of the insulation tile.

Especially in combination with a rectangular shaped tile having four sides, protruding net parts extending from two sides of that tile, offer a huge advantage. Since the tiles are arranged in such a way that their sides touch, all four sides will be in contact with sides of adjacent insulation tiles. If the structural net extends from two of the four sides of the insulation tile, these two sides will have protruding net parts which can interact with the surface layers of adjacent tiles, while the two remaining sides of the tile will be able to interact with protruding net parts of other adjacent tiles. The protruding net parts of these adjacent tiles will interact with the surface layer of the insulation tile at those two remaining sides. Preferably the protruding net parts extend from the entire length of a side of the insulation tile. As a result of such a configuration, all touching sides will be completely covered by protruding net parts, two of them being part of the tile, two of them being parts of adjacent insulation tiles. The insulation layer will thus be completely sealed from outside influences without the presence of slits between the tiles. Meteorological influences will thus have no effect, and the insulating capacities of the material will be optimal.

Preferably, the protruding net parts extend from two adjacent laying sides of the tile, which is preferably rectangular-shaped. As such, the protruding net parts are not laying on opposite ends of the insulation tile. This way, the protruding net parts of the different insulation tiles will overlap with each other in two directions, as a result of which the tiles will be better connected to each other, and the tiles will be tightly sealed without slits in any direction.

Preferably, the layer of an insulating material comprises an insulating material chosen from the group consisting of cellulose, glass wool, rock wool, polystyrene, urethane foam, vermiculite, PU, XPS, EPS or combinations of two or more thereof.

These are all materials having goods insulating characteristics. If so desired, combinations of these materials can also be used. Also several insulating layers comprising different insulating materials can be applied. The insulating materials are however not restricted to this group of materials and all other insulating materials known by the person skilled in the art, can also be used.

Preferably, structural net comprises a fibrous material chosen from the group of glass fiber, flax, or combinations of two or more thereof.

Fibrous materials show optimal strength and sustainability on the one hand, while on the other hand being very light and flexible. Therefore, they are the ideal materials for a structural net as is used in the present invention. Glass fiber and flax are two preferred fibers which can be used for the production of the structural net. However, all other fibrous materials known by the person skilled in the art, can also be used.

The present invention further also relates to an insulation tile according to the above described modular insulation system, the insulation tile comprising multiple layers, at least one of said layers being a layer of an insulating material, another layer being an upper surface layer comprising a structural net embedded in a first adhesive hardening compound, characterized in that the structural net extends from the upper surface layer of the insulation tile outside a surface area of the tile, thus forming protruding net parts, the protruding net parts being capable of interacting with the upper surface layer of an adjacent insulation tile.

The present invention further also relates to a method for insulating a wall wherein the method comprises the following steps:
- at least one insulation tile according to the modular insulation of the present invention is attached to a wall to be insulated
- a second adjacent insulation tile according to the modular insulation system of the present invention is attached to the wall in such a way that the protruding net parts of the insulation tile are attached to an upper surface layer of the adjacent insulation tile by smearing a second adhesive hardening compound over the net and the upper surface layer of an adjacent insulation tile in such a manner that the upper surface layer of the second tile is covered with a layer of the second adhesive hardening compound in which the protruding net parts are embedded.

As such, complete walls can be easily covered with the insulation tiles according to the modular insulation system of the present invention. The method is faster than the currently available method for insulating a wall, and attaches the different insulation tiles in a tightly sealed fashion.

The insulation tiles can be attached to the wall in any way known by the person skilled in the art, for example they can be glued, stapled, stitched, attached with nails, screws, bolts, ... or any other way known by the person skilled in the art.

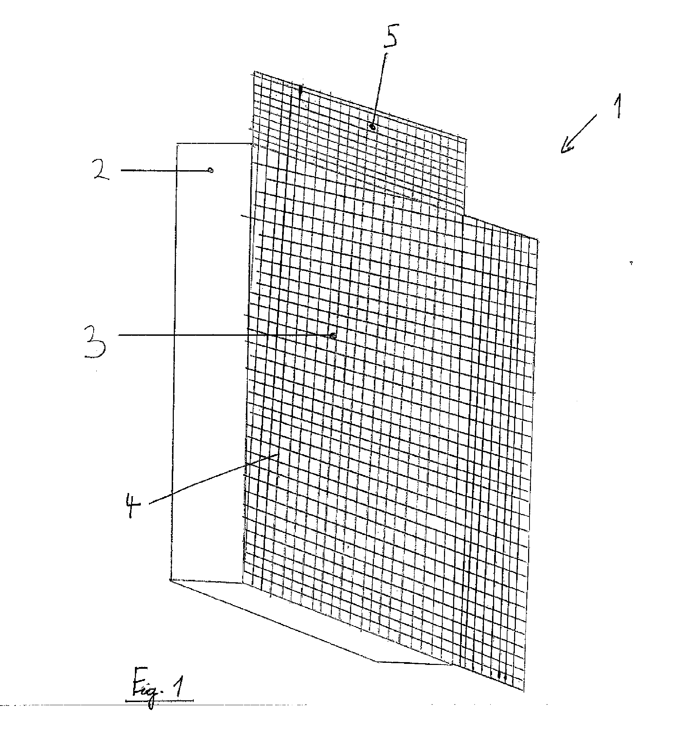

The invention will be further illustrated below, based on the enclosed figure 1.

Figure 1 shows a preferred embodiment of an insulation tile according to the present invention.

The insulation tile 1 shown in figure 1 is a part of a preferred embodiment of the modular insulation system according to the present invention. The insulation tile 1 comprises the at least one layer of an insulating material 2, an upper surface layer 3 comprising a structural net 4 embedded in a first adhesive hardening compound and protruding net parts 5.

The insulation tile 1 has a rectangular shape with two main upper surfaces, one of them being provided with the upper surface layer 3 described above. The protruding net parts 5 extend from the net 4 of this upper surface layer 3 on two sides of the insulation tile1. The protruding net parts 5 extend over the entire length of these sides.

As such, multiple insulation tiles 1 according to the present invention, can cooperate with each other in a modular insulation system. The protruding net parts 5 overlap with the upper surface layer 3 of two adjacent insulation tiles 1, and this in two different directions, as a result of which the different tiles 1 of the insulation structure will be firmly attached to each other. Also, the structure will be tightly sealed without any slits.

After the different tiles 1 are attached to the wall, a second adhesive hardening compound can be smeared over the net and the upper surface layer 3 of an adjacent insulation tile 1 in such a manner that the upper surface layer 3 of the second tile is covered with a layer of the second adhesive hardening compound in which the protruding net parts 5 are embedded. As such, all tiles 1 are firmly attached, and the insulation layer is protected from outside influences.

The insulation structure created with the modular insulation system according to the present invention, can form the base for other decorative or finishing layers that will be applied on top of the insulation layer. For example, plaster, etc. can be applied on top of the insulation structure.

The modular insulation system is described here above mainly for outside insulation applications. The invention is however not restricted thereto and the modular insulation system according to the present invention can also be used for inside purposes.

## Claims

1. Modular insulation system comprising at least one insulation tile (1) comprising multiple layers, at least one of said layers being a layer of an insulating material (2), another layer being an upper surface layer (3) comprising a structural net (4) embedded in a first adhesive hardening compound, **characterized in that** the structural net (4) extends from the upper surface layer of the insulation tile (1) outside a surface area of the tile (1), thus forming protruding net parts (5), the protruding net parts (5) being capable of interacting with the upper surface layer (3) of an adjacent insulation tile (5).

2. Modular insulation system according to claim 1, **characterized in that** the protruding net parts (5) of the insulation tile (1) are attached to an upper surface layer (3) of an adjacent insulation tile (1) by smearing a second adhesive hardening compound over the net (4) and the upper surface (3) layer of an adjacent insulation tile (1) in such a manner that the upper surface layer (3) of the second tile (1) is covered with a layer of the second adhesive hardening compound in which the protruding net parts (5) are embedded.

3. Modular insulation system according to claim 1 or 2, **characterized in that** the first adhesive hardening compound is chosen from the group consisting of cement, lime, mortar, plaster, modified cement, plastics, synthetic polymers, and combinations of two or more thereof.

4. Modular insulation system according claim 2 or 3 **characterized in that** the second adhesive hardening compound is chosen from the group consisting of cement, lime, mortar, plaster, modified cement, plastics, synthetic polymers, and combinations of two or more thereof.

5. Modular insulation system according to any one of claims 2-4, **characterized in that** first adhesive hardening compound is the same compound as the second adhesive hardening compound.

6. Modular insulating system according to any one of claims 1-5, **characterized in that** the insulation tile (1) has a rectangular shape comprising two main upper surfaces and four sides.

7. Modular insulating system according any one of claims 1-6, **characterized in that** the protruding net parts (5) extend from at least one side of the insulation tile (1).

8. Modular insulating system according to any one of claims 1-7, **characterized in that** the protruding net parts (5) extend from two adjacent sides of the insulation tile (1).

9. Modular insulating system according to any one of claims 2-8, **characterized in that** the layer of an insulating material (2) comprises an insulating material chosen from the group consisting of cellulose, glass wool, rock wool, polystyrene, urethane foam, vermiculite, PU, XPS, EPS or combinations of two or more thereof.

10. Modular insulation system according to any one of claims 2-8, **characterized in that** the structural net (4) comprises a fibrous material chosen from the group of glass fiber, flax, or combinations of two or more thereof.

11. Insulation tile (1) according to the modular insulation system of any one of claims 1-10, the insulation tile (1) comprising multiple layers, at least one of said layers being a layer of an insulating material (2), another layer being an upper surface layer (3) comprising a structural net (4) embedded in a first adhesive hardening compound, **characterized in that** the structural net (4) extends from the upper surface layer (3) of the insulation tile (1) outside a surface area of the tile (1), thus forming protruding net parts (5), the protruding net parts (5) being capable of interacting with the upper surface layer (3) of an adjacent insulation tile (1).

12. Insulation tile (1) according to claim 11, **characterized in that** the protruding net parts (5) of the insulation tile (1) are attached to an upper surface layer (3) of an adjacent insulation tile 1 by smearing a second adhesive hardening compound over the net (4) and the upper surface layer (3) of an adjacent insulation tile (1) in such a manner that the upper surface layer (3) of the second tile (1) is covered with a layer of the second adhesive hardening compound in which the protruding net parts (5) are embedded.

13. Insulation tile (1) according to claim 11 or 12, **characterized in that** the first adhesive hardening compound is chosen from the group consisting of cement, lime, mortar, plaster, modified cement, plastics, synthetic polymers, and combinations of two or more thereof.

14. Insulation tile according claim 12 or 13 **characterized in that** the second adhesive hardening compound is chosen from the group consisting of cement, lime, mortar, plaster, modified cement, plastics, synthetic polymers, and combinations of two or more thereof.

15. Method for insulating a wall **characterized in** the method comprises the following steps:
- at least one insulation tile (1) according to the modular insulation system of any one of claims 1-10 is attached to a wall to be insulated
- a second adjacent insulation tile (1) according to the modular insulation system of any one of claims 1-10 is attached to the wall in such a way that the protruding net parts (5) of the insulation tile are attached to an upper surface layer (3) of the adjacent insulation tile by smearing a second adhesive hardening compound over the net (4) and the upper surface layer (3) of an adjacent insulation tile (1) in such a manner that the upper surface layer (3) of the second tile (1) is covered with a layer of the second adhesive hardening compound in which the protruding net parts (5) are embedded.
